(19) Europäisches Patentamt
European Patent Office
Office européen des brevets

(11) **EP 3 300 249 B1**

(12) **FASCICULE DE BREVET EUROPEEN**

(45) Date de publication et mention
de la délivrance du brevet:
**28.08.2019 Bulletin 2019/35**

(51) Int Cl.:
***H02S 50/00*** *(2014.01)*

(21) Numéro de dépôt: **17191713.1**

(22) Date de dépôt: **18.09.2017**

(54) **PROCÉDÉ ET SYSTÈME DE SURVEILLANCE ET DE DIAGNOSTIC D'UNE ARCHITECTURE PHOTOVOLTAÏQUE**

VERFAHREN UND SYSTEM ZUR ÜBERWACHUNG UND DIAGNOSE EINER FOTOVOLTAIK-ARCHITEKTUR

METHOD AND SYSTEM FOR MONITORING AND DIAGNOSING A PHOTOVOLTAIC ARCHITECTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.09.2016 FR 1658995**

(43) Date de publication de la demande:
**28.03.2018 Bulletin 2018/13**

(73) Titulaire: **COMMISSARIAT À L'ÉNERGIE ATOMIQUE ET AUX ÉNERGIES ALTERNATIVES 75015 Paris (FR)**

(72) Inventeurs:
• **AL SHAKARCHI, Franck 73160 SAINT-SULPICE (FR)**
• **DESMOULIERE, Jean-Baptiste 73230 SAINT-JEAN-D'ARVEY (FR)**

(74) Mandataire: **GIE Innovation Competence Group 310, avenue Berthelot 69372 Lyon Cedex 08 (FR)**

(56) Documents cités:
**WO-A1-2013/170422    US-A1- 2012 215 372**

**Description**

**Domaine technique de l'invention**

La présente invention se rapporte à un procédé de surveillance et de diagnostic d'une architecture photovoltaïque. L'invention concerne également un système de surveillance et de diagnostic d'une architecture photovoltaïque.

**Etat de la technique**

Une architecture photovoltaïque comporte en règle générale plusieurs chaînes de modules photovoltaïques (appelés également panneaux photovoltaïques ou panneaux solaires) connectés en parallèle. Dans chaque chaîne, les modules photovoltaïques sont connectés en série. Chaque module photovoltaïque comporte plusieurs cellules photovoltaïques connectées en série, sous forme de rangées de cellules. Chaque cellule photovoltaïque est destinée à convertir une énergie solaire en une énergie électrique. Les chaînes de modules photovoltaïques sont reliées à un convertisseur de tension, comme par exemple un onduleur qui permet de convertir la tension continue fournie par chaque chaîne de modules en une tension alternative. Le rôle du convertisseur est également de déterminer un point de fonctionnement pour lequel la puissance délivrée par l'ensemble de l'architecture photovoltaïque est maximale (point de fonctionnement maximal désigné MPP pour "Maximum Power Point").

La présence d'un défaut dans une chaîne de modules photovoltaïques handicape la production d'électricité de toute la chaîne et donc de toute l'architecture de production d'électricité. Le document US2012/215372 décrit un procédé de surveillance d'une architecture photovoltaïque.

Il est donc nécessaire de surveiller l'état de fonctionnement de chaque module photovoltaïque d'une chaîne afin de repérer un éventuel défaut au niveau d'un module et d'y pallier le plus rapidement possible. Selon les cas, le défaut pourra être de différentes natures, notamment permanent s'il s'agit d'un problème matériel ou temporaire s'il s'agit par exemple de la présence d'un ombrage ou d'une poussière sur le module.

Pour détecter les défauts de fonctionnement des modules, plusieurs solutions de surveillance d'une architecture photovoltaïque ont déjà été proposées. Les demandes de brevets US2015/094967A1, WO2012/128807A1, FR2956213A1, WO2010/118952A1, US9048781B2 ou US2014/266294A1 décrivent toutes des solutions de ce type. Afin de vérifier l'état de fonctionnement d'un module, la plupart des solutions se base notamment sur l'analyse des courbes Courant-Tension, plus communément appelées courbes I-V.

Un module photovoltaïque est en effet caractérisé par un ensemble de courbes I-V de référence pour différents niveaux d'ensoleillement (exprimés en Watt/m$^2$). Autrement dit, pour un niveau d'ensoleillement donné, un module photovoltaïque sain, c'est-à-dire non défaillant, sera théoriquement capable de suivre l'une des courbes I-V de référence pour ce niveau d'ensoleillement. En revanche, si un module présente un défaut en fonctionnement, sa courbe I-V s'éloigne alors de cette courbe de référence pour ce niveau d'ensoleillement.

La plupart des solutions décrites dans les documents brevets référencés ci-dessus présentent cependant certains inconvénients. Pour déterminer la courbe I-V d'un module, les solutions connues nécessitent souvent l'emploi d'un système de mesure de courbes I-V nécessitant plusieurs capteurs, notamment un capteur de courant pour chaque module, ce qui complexifie l'architecture et augmente son coût. Pour déterminer l'état de fonctionnement d'un module, certaines solutions nécessitent également de couper la production électrique de la chaîne.

Le brevet US 8,314,375B2 décrit pour sa part un algorithme de recherche du point de fonctionnement maximal d'une architecture photovoltaïque à partir de courbes I-V reconstituées.

Par ailleurs, la demande de brevet US2012/215372A1 décrit une solution de surveillance d'un module photovoltaïque qui comporte plusieurs cellules photovoltaïques. Elle permet de reconstituer la courbe I-V d'un module photovoltaïque notamment en effectuant une modulation directement au niveau du module et en utilisant à la fois un capteur de courant et un capteur de tension pour le module. Cette solution s'avère particulière lourde et couteuse pour la surveillance et le diagnostic d'un seul module.

Le but de l'invention est de proposer un procédé de surveillance et de diagnostic d'une architecture photovoltaïque qui permet de caractériser facilement le comportement d'un module photovoltaïque d'une chaîne de cette architecture, ce procédé étant simple, fiable et ne nécessitant pas l'emploi d'un matériel encombrant et coûteux au niveau de la chaîne ou de chaque module surveillé.

**Exposé de l'invention**

Ce but est atteint par un procédé de surveillance et de diagnostic d'une architecture photovoltaïque comportant au moins une chaîne de plusieurs modules photovoltaïques connectés en série, chaque module photovoltaïque comportant plusieurs cellules photovoltaïques, ladite chaîne étant connectée à un convertisseur de tension, ledit procédé comportant les étapes ci-dessous :

- Une étape de surveillance de la tension aux bornes de chaque module de la chaîne de manière à générer pour chaque module un profil de tension en fonction du temps,
- Une étape de modulation de la tension aux bornes de la chaîne de modules photovoltaïques déclenchée lorsque la tension surveillée aux bornes d'un module de la chaîne dépasse un seuil d'écart de tension déterminé,
- Une étape d'acquisition de valeurs de la tension aux bornes de chaque module photovoltaïque de la chaîne de modules photovoltaïques en cours de modulation de manière à obtenir un profil de variation de tension aux bornes de chaque module photovoltaïque en fonction du temps,
- Une étape d'estimation du courant circulant à travers ladite chaîne de modules photovoltaïques en fonction du temps lors de la modulation,
- Une étape de détermination d'une courbe Courant-Tension pour chaque module photovoltaïque de la chaîne de modules photovoltaïques,
- Une étape de détermination d'un type de défaut par analyse de la courbe de Courant-Tension obtenue.

On comprend que la solution de l'invention est particulièrement simple car elle s'affranchit à la fois de réaliser la modulation au niveau de chaque module d'une architecture, celle-ci étant réalisée au niveau de toute la chaîne de modules, et de l'utilisation de capteurs de courant au niveau de chaque module. Dans ce dernier cas, le courant est en effet estimé au niveau de toute la chaîne ce qui simplifie grandement l'architecture mais aussi le fonctionnement de la solution.

Selon un premier mode de réalisation, l'étape d'estimation du courant circulant à travers ladite chaîne de modules photovoltaïques en fonction du temps lors de la modulation comporte :

- Une étape d'acquisition du courant total circulant dans l'architecture photovoltaïque,
- Une étape de détermination d'un courant moyen circulant dans ladite chaîne de modules photovoltaïques à l'aide dudit courant total acquis et du nombre de chaînes de modules photovoltaïques présentes dans l'architecture.

Selon un deuxième mode de réalisation, l'étape d'estimation du courant comporte :

- Une étape de détermination d'un module de référence parmi les modules de la chaîne de modules photovoltaïques,
- Une étape de détermination d'une courbe Courant-Tension de référence pré-mémorisée pour ledit module choisi comme module de référence,
- Une étape de détermination du courant à chaque instant lors de l'étape de modulation à partir de ladite courbe Courant-Tension de référence et de la tension mesurée aux bornes dudit module de référence.

Selon une particularité de ce deuxième mode de réalisation, l'étape de détermination du module de référence est mise en oeuvre par comparaison des valeurs maximales de tension aux bornes de chaque module de la chaîne de modules photovoltaïques.

Selon une particularité, ladite étape de modulation de la tension est mise en oeuvre par commande dudit convertisseur sur une plage de tension réduite, entre une valeur minimale supérieure à zéro et une valeur maximale supérieure à ladite valeur minimale.

Selon une autre particularité, ladite plage de tension réduite est comprise entre 50% et 100% de la tension en circuit ouvert de la chaîne de modules photovoltaïques.

Selon une autre particularité, ladite valeur de tension minimale de la plage de tension réduite de modulation est déterminée à partir du nombre de modules défectueux qu'il est possible de détecter dans ladite chaîne de modules photovoltaïques.

Avantageusement, le procédé comporte une étape de détermination du nombre de défauts à identifier à partir de ladite valeur minimale de tension que ledit convertisseur peut fournir.

Selon une particularité, lesdites valeurs de tension aux bornes de chaque module sont obtenues lors d'une une étape de mesure de la tension par un capteur de tension positionné aux bornes de chaque module photovoltaïque.

L'invention concerne également un système de surveillance et de diagnostic d'une architecture photovoltaïque qui comporte au moins une chaîne de plusieurs modules photovoltaïques connectés en série, chaque module photovoltaïque comportant plusieurs cellules photovoltaïques, ladite chaîne étant connectée à un convertisseur de tension, ledit système comportant une unité de commande et de traitement qui comporte :

- Un module de surveillance de la tension aux bornes de chaque module de la chaîne de manière à générer pour chaque module un profil de tension en fonction du temps,
- Un module logiciel de commande d'une modulation de la tension aux bornes de la chaîne de modules photovoltaïques activée lorsque la tension surveillée aux bornes d'un module de la chaîne dépasse un seuil d'écart de tension déterminé,

- Un module logiciel d'acquisition de valeurs de tension aux bornes de chaque module photovoltaïque de la chaîne de modules photovoltaïques en cours de modulation de manière à obtenir un profil de variation de tension aux bornes de chaque module photovoltaïque en fonction du temps,
- Un module logiciel d'estimation du courant circulant à travers ladite chaîne de modules photovoltaïques en fonction du temps lors de la modulation,
- Un module logiciel de détermination d'une courbe Courant-Tension pour chaque module photovoltaïque de la chaîne de modules photovoltaïques
- Un module logiciel de détermination d'un type de défaut par analyse de la courbe de Courant-Tension obtenue.

Selon un premier mode de réalisation, le module d'estimation du courant circulant à travers ladite chaîne de modules photovoltaïques en fonction du temps lors de la modulation comporte :

- Un module d'acquisition du courant total circulant dans l'architecture photovoltaïque,
- Un module de détermination d'un courant moyen circulant dans ladite chaîne de modules photovoltaïques à l'aide dudit courant total acquis et du nombre de chaînes de modules photovoltaïques présentes dans l'architecture.

Selon un deuxième mode de réalisation, ledit module d'estimation du courant comporte :

- Un module logiciel de détermination d'un module de référence parmi les modules photovoltaïques de la chaîne de modules photovoltaïques,
- Un module logiciel de détermination d'une courbe Courant-Tension de référence pré-mémorisée pour ledit module choisi comme module de référence,
- Un module logiciel de détermination du courant à chaque instant à partir de ladite courbe Courant-Tension de référence et de la tension mesurée aux bornes dudit module de référence.

Selon une particularité de ce deuxième mode de réalisation, le module logiciel de détermination du module de référence comporte un module logiciel de comparaison des valeurs maximales de tension aux bornes de chaque module de la chaîne de modules photovoltaïques.

Selon une particularité de l'invention, ledit module logiciel de commande de la modulation de la tension est agencé pour commander le convertisseur sur une plage de tension réduite entre une valeur minimale supérieure à zéro et une valeur maximale supérieure à ladite valeur minimale.

Avantageusement, ladite plage de tension réduite est comprise entre 50% et 100% de la tension en circuit ouvert de la chaîne de modules photovoltaïques.

Selon une particularité, ladite valeur de tension minimale de la plage de tension réduite de modulation est déterminée à partir du nombre de modules défectueux qu'il est possible de détecter dans ladite chaîne de modules photovoltaïques.

Selon une autre particularité, le système comporte un module de détermination du nombre de défauts à identifier à partir de ladite valeur minimale de tension que ledit convertisseur peut fournir.

Selon une autre particularité, le système comporte des moyens de mesure de la tension aux bornes de chaque module photovoltaïque de la chaîne.

L'invention concerne également un programme d'ordinateur qui comprend des modules logiciels destinés à être exécuté par une unité de commande et de traitement de manière à mettre en oeuvre le procédé tel que défini ci-dessus.

L'invention concerne également un support de stockage lisible par une unité de commande et de traitement comportant le programme d'ordinateur défini ci-dessus.


**Brève description des figures**

D'autres caractéristiques et avantages vont apparaître dans la description détaillée qui suit faite en regard des dessins annexés dans lesquels :

- La figure 1 représente, de manière schématique, une architecture photovoltaïque.
- La figure 2 représente les courbes I-V d'un module photovoltaïque pour plusieurs niveaux d'irradiance.
- La figure 3 représente, pour un même niveau d'irradiance sur un module photovoltaïque, deux courbes I-V caractéristiques d'un module photovoltaïque, respectivement sans défaut et avec un défaut.
- La figure 4 représente de manière schématique le système de surveillance de l'invention adapté sur une architecture photovoltaïque et employant une première solution de modulation de la tension aux bornes d'une chaîne de modules.
- La figure 5 représente de manière schématique le système de surveillance de l'invention adapté sur une architecture photovoltaïque et employant une deuxième solution de modulation de la tension aux bornes d'une chaîne de modules.

- Les figures 6A à 6C représentent une même chaîne de module photovoltaïque selon trois cas de fonctionnement distincts.
- Les figures 7A à 7C représentent les courbes de tension en fonction du temps, obtenues lors de la modulation, respectivement pour les trois cas de fonctionnement des figures 6A à 6C.
- Les figures 8A à 8C représentent les courbes I-V obtenues pour chaque module de la chaîne de modules dans le premier cas de fonctionnement de la figure 6A.
- Les figures 9A à 9C représentent les courbes I-V obtenues pour chaque module de la chaîne de modules dans le deuxième cas de fonctionnement de la figure 6B.
- Les figures 10A à 10C représentent les courbes I-V obtenues pour chaque module de la chaîne dans le troisième cas de fonctionnement de la figure 6C.
- Les figures 11A à 11C représentent des courbes illustrant le principe de transposition linéaire employée pour l'établissement de la courbe I-V de référence.

## Description détaillée d'au moins un mode de réalisation

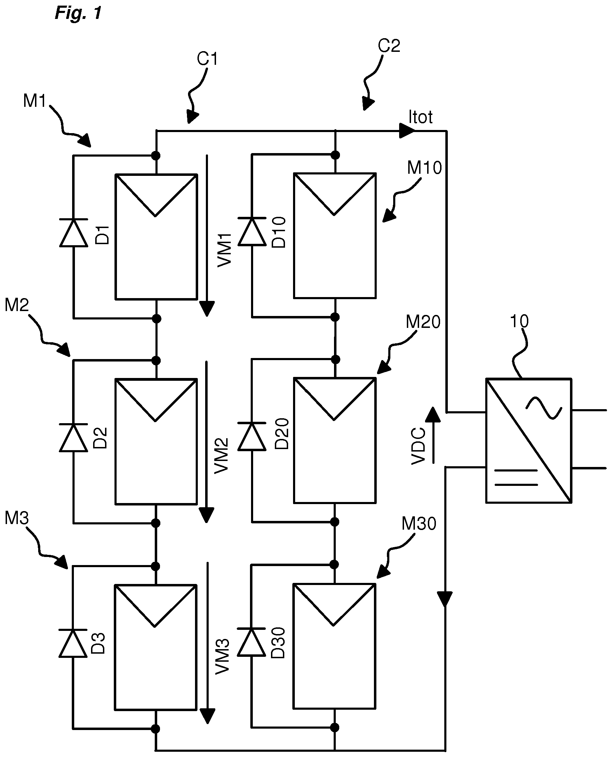

En référence à la figure 1, une architecture photovoltaïque présente classiquement les particularités d'agencement et de fonctionnement suivantes :

- Plusieurs chaînes C1, C2 de modules photovoltaïques (appelés également panneaux photovoltaïques ou panneaux solaires) sont connectées en parallèle (deux chaînes sur la figure 1).
- Chaque chaîne de modules photovoltaïques comporte plusieurs modules photovoltaïques connectés en série (M1-M3 pour la chaine C1 et M10-M30 pour la chaîne C2).
- Un module photovoltaïque (référencé de manière générale Mi dans la suite du texte) comporte plusieurs cellules photovoltaïques (non représentées) connectés en série. Les cellules photovoltaïques sont réparties en plusieurs rangées.
- Chaque cellule photovoltaïque est destinée à convertir une énergie solaire en une énergie électrique.
- Un convertisseur de type DC/DC ou DC/AC est destiné à convertir la tension fournie par chaque chaîne de modules de l'architecture. Sur les figures annexées, de manière non limitative, nous avons représenté un convertisseur de type DC/AC, c'est-à-dire un onduleur 10. De manière connue, cet onduleur 10, comporte plusieurs bras de commutation à base de transistors et est destiné à convertir une tension continue fournie par chaque chaîne de modules en une tension alternative.
- Des moyens de commande, intégrés ou non au convertisseur, sont aptes à commander le convertisseur pour effectuer la conversion de tension.
- Chaque module photovoltaïque comporte avantageusement des diodes anti-retours (non représentées) positionnées de manière adaptée, par exemple en série avec les modules de chaque chaîne.
- Chaque module photovoltaïque comporte avantageusement des diodes de contournement (dites de "bypass") pour contourner chacune une rangée de cellules distinctes d'un module si une cellule de cette rangée était en défaut. Sur la figure 1, une diode de "bypass" est représentée par module (les diodes sont référencées D1, D2, D3, D10, D20, D30 et référencées Di de manière générale dans la suite du texte).

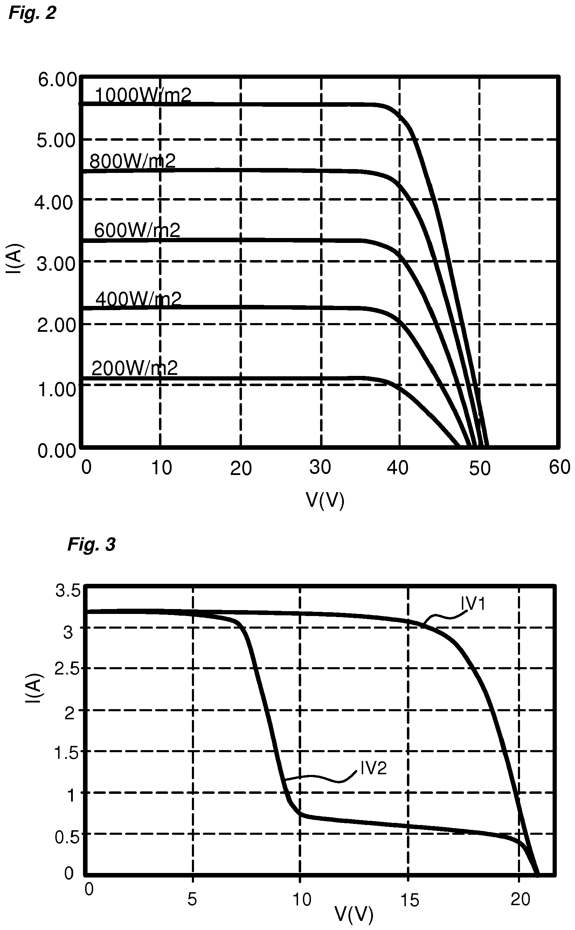

Comme évoqué précédemment, les performances d'un module photovoltaïque Mi sont caractérisées par un ensemble de courbes Courant-Tension, dénommées ci-après courbes I-V. La figure 2 représente les courbes I-V caractéristiques de référence d'un module photovoltaïque pour différents niveaux d'ensoleillement, appelés irradiance et exprimés en W/m$^2$.

La tension totale d'une chaîne de modules photovoltaïques résulte de la somme des tensions aux bornes de chaque module (en incluant celles aux bornes des câbles et connectiques). Sur la figure 1, cette tension totale aux bornes de la chaîne C1 inclut donc les tensions VM1, VM2, VM3. Aux bornes de chaque module, les tensions pourront être différentes si les modules présentent des caractéristiques I-V distinctes. En revanche, même si les modules M1 à M3 de la chaîne C1 présentent des caractéristiques I-V différentes, le fonctionnement de la chaîne sera tel que le courant de la chaîne qui traverse chaque module Mi de la chaîne reste le même. Si un module est défaillant et ne peut faire passer ce courant, une ou plusieurs diodes de "bypass" (Di) permettent de faire circuler le courant supplémentaire que les cellules du module ne peuvent faire passer. Le courant total Itot fournie par l'architecture est la somme des courants qui traversent chaque chaîne de l'architecture.

La figure 3 représente, pour un même module photovoltaïque Mi, la courbe I-V, référencée IV1, obtenue lorsque ce module est sain et la courbe I-V, référencée IV2, obtenue lorsque le module est défaillant. En présence d'un défaut de fonctionnement, par exemple un ombrage au-dessus du module, la courbe I-V réel de ce module s'éloigne de sa courbe de référence et suit alors le profil semblable à celui représenté sur la figure 3.

**EP 3 300 249 B1**

On comprend ainsi l'importance de surveiller l'état de fonctionnement des modules Mi d'une architecture photovoltaïque et de mettre en place un procédé qui puisse effectuer cette surveillance et diagnostiquer la nature des défauts, de manière fiable, efficace et à moindre coût.

Le procédé de l'invention vise ainsi à la surveillance des modules d'une architecture photovoltaïque et au diagnostic sur ces modules. Dans la suite de la description, nous nous intéresserons plus particulièrement à la surveillance et au diagnostic sur les modules d'au moins une chaîne C1 de modules photovoltaïques de l'architecture. La chaîne C1 de modules photovoltaïques surveillée comportera au moins deux modules photovoltaïques (trois modules sur les figures annexées).

Le procédé de surveillance et de diagnostic de l'invention est mis en oeuvre par un système de surveillance et de diagnostic.

Le système de surveillance et de diagnostic comportera au moins une unité de commande et de traitement UC destinée à mettre en oeuvre ledit procédé de surveillance et de diagnostic.

Le procédé de surveillance et de diagnostic de l'invention comporte un programme d'ordinateur formé d'une suite d'instructions ou modules logiciels aptes à être exécutées par ladite unité de commande et de traitement UC pour surveiller l'état de fonctionnement de chaque module et diagnostiquer la présence d'éventuels défauts en vue d'entreprendre les actions de maintenance adaptées. Le programme d'ordinateur est stocké dans les moyens de mémorisation de l'unité de commande et de traitement UC de manière à pouvoir être exécuté par son microprocesseur. Dans la suite de la description, on considérera que l'unité de commande et de traitement est apte à exécuter un module logiciel adapté pour effectuer chaque tâche nécessaire à la surveillance d'un module photovoltaïque.

Dans un mode de réalisation particulier, cette unité de commande et de traitement fait partie des moyens de commande de l'onduleur 10 et est incluse dans ces moyens de commande.

La détection du type de défaut et donc le diagnostic sur un module présumé défectueux sont mis en oeuvre en commandant une modulation de la tension continue (tension DC) aux bornes de la chaîne C1 de modules photovoltaïques sur une large plage de tension, allant de préférence de 50% à 100% de la tension en circuit ouvert de la chaîne. La modulation est mise en oeuvre pour toute la chaîne. Par modulation de la tension, on entend une variation de la tension totale aux bornes de la chaîne. La tension aux bornes de la chaîne sera ainsi ajustée de manière à prendre plusieurs valeurs distinctes au cours du temps lors de la modulation.

Cependant, cette modulation étant légèrement intrusive et éventuellement génératrice de perturbations, le procédé vise préalablement à détecter la présence de défauts sur un module pour mettre en place le diagnostic par modulation uniquement lorsque cela est nécessaire. Pour cela, le procédé comporte un module de surveillance de la tension au cours du temps aux bornes de chaque module de la chaîne en fonctionnement normal, c'est-à-dire au point de fonctionnement de puissance maximale de la chaîne.

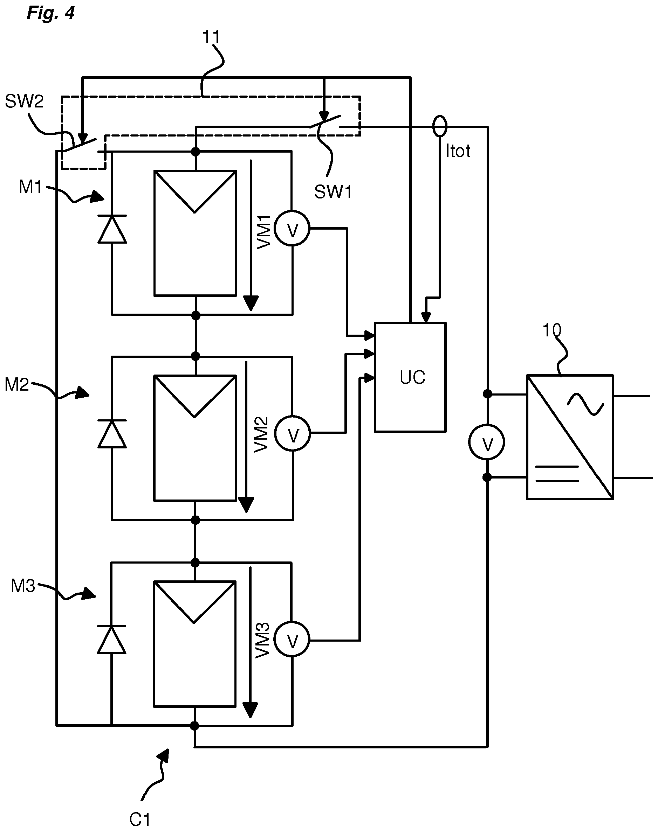

Pour cela, le système de surveillance comporte préférentiellement des moyens de mesure de la tension, installés sur l'architecture photovoltaïque pour mesurer la tension aux bornes de chaque module photovoltaïque de la chaîne (tensions VM1, VM2, VM3). Toute autre solution d'acquisition des mesures de tension pourra cependant être employée. Ces moyens de mesure (indiqués par les Voltmètres sur les figures 3 et 4) sont formés de plusieurs capteurs de tension connectés chacun en parallèle d'un module photovoltaïque distinct de la chaîne. Les mesures de tension effectuées aux bornes de chaque module sont bien entendu synchronisées entre elles. Les mesures sont envoyées pour traitement dans l'unité de commande et de traitement UC. Un module logiciel spécifique de l'unité de commande et de traitement UC récupère ces données de mesure et les traite.

Lors de la surveillance des modules d'une chaîne, l'unité de commande et de traitement UC acquiert ainsi les données de tension mesurées aux bornes de chaque module photovoltaïque Mi lors de la modulation. Le système de surveillance comportera avantageusement un convertisseur analogique/numérique pour convertir les données de mesure fournies par chaque capteur de tension.

L'unité de commande et de traitement UC obtient ainsi, pour chaque module photovoltaïque Mi de la chaîne C1, une courbe de tension en fonction du temps.

La détection de la présence de défauts sur un module repose sur la comparaison des mesures de tension entre modules en instantané ou en continu.

- Comparaison en instantané

Un défaut sera détecté parce qu'un module présentera une tension plus faible que les autres. L'unité de commande et de traitement UC récupère, par exemple à intervalles réguliers, les tensions aux bornes de chaque module Mi de la chaîne C1. Elle détermine quelle est la valeur maximale de tension qui a été relevée. Puis l'unité de commande et de traitement UC compare chaque tension mesurée aux bornes de chaque module à cette valeur maximale.

Selon l'écart de tension par rapport à la valeur maximale, l'unité de commande et de traitement UC pourra être en mesure de déterminer la présence ou non d'un défaut et éventuellement la catégorie de défaut.

Pour déterminer la catégorie de défauts, l'unité de commande et de traitement UC met en oeuvre les étapes suivantes :

- Elle détermine une tension de référence d'une rangée de cellules dans un module à partir de la tension maximale de module divisée par le nombre de rangées/diodes de cellules par modules : Vmax/Ndiodes.
- Lorsque l'écart de tension est de l'ordre d'un multiple Nmultiple de la tension de référence Vmax/Ndiodes calculée ci-dessus, l'unité de commande et de traitement UC peut en conclure que le module présente des défauts localisés sur un nombre Ndéfauts de rangées de cellules tel que Ndéfauts = Nmultiples des catégories suivantes par rangée :

  - Défaut de la diode de "bypass" pour la rangée de cellules : court-circuit, inversion ;
  - Défaut de connexion au sein de la rangée de cellules : corrosion forte au niveau de plusieurs cellules, circuit ouvert, court-circuit ;
  - Cellules cassées au sein de la rangée ;
  - Perte de transparence de la vitre au niveau de la rangée de cellules : homogène ou hétérogène sur un nombre important de cellules, si bien que la diode de "bypass" est activée pour cette rangée ;
  - Corrosion de la vitre au niveau de la rangée de cellules : homogène ou hétérogène sur un nombre important de cellules, si bien que la diode de "bypass" est activée pour cette rangée ;
  - Délamination au niveau de la rangée de cellules : homogène ou hétérogène sur un nombre important de cellules, si bien que la diode de "bypass" est activée pour cette rangée ;

- Lorsque l'écart de tension est inférieur à la tension de référence Vmax/Ndéfauts, l'unité de commande et de traitement peut lier le défaut à une dégradation de la résistance série, à une dégradation de la résistance shunt ou à une dégradation de la pente autour du point de puissance maximale :

  - Absence de diode de bypass ;
  - Dégradation potentielle induite (dénommée PID) ;
  - Corrosion des soudures sur un nombre faible de cellules ;
  - Perte hétérogène de transparence sur un nombre faible de cellules ;
  - Corrosion hétérogène de la vitre sur un nombre faible de cellules ;
  - Délamination hétérogène sur un nombre faible de cellules ;

- L'écart de tension peut aussi être une combinaison d'un multiple de la tension de référence "rangée" et d'une valeur inférieure, ce qui signifie une combinaison des défauts cités plus haut ;

En variante de réalisation, l'unité de commande et de traitement détermine la tension de référence d'une rangée de cellules à partir de la tension Vmpp au point de puissance maximale (MPP) disponible dans la "datasheet" du module, de sorte que la tension de référence vaut Vmpp/Ndiodes. La tension Vmpp peut également être corrigée de manière à tenir compte de la température du module.

- Comparaison en continu

L'unité de commande et de traitement analyse l'évolution de la tension au cours du temps, par exemple sur plusieurs jours consécutifs. L'unité de commande et de traitement sera notamment en mesure de discriminer les défauts selon leurs natures temporelles :

  ◦ Défaut permanent : de nombreux défauts entrent dans cette catégorie (bris de glace, diode en défaut, rangée en circuit-ouvert,...) ;
  ◦ Défaut localisé temporellement : typiquement un ombrage ;
  ◦ Défaut intermittent : par exemple, un défaut intermittent de connectique ;
  ◦ Défaut isolé à ignorer.

Quelle que soit la méthode de comparaison appliquée (en instantané ou en continu), l'unité de commande et de traitement UC est ainsi apte à déclencher l'étape de modulation de tension aux bornes de la chaîne de modules en vue de confirmer ou d'infirmer la présence d'un défaut sur un module, par construction de sa courbe I-V.

Lorsque l'unité de commande et de traitement détecte que la tension aux bornes d'un module présente un profil non conforme, elle déclenche une étape de modulation aux bornes de la chaîne.

Le système de surveillance de l'invention comporte ainsi un module logiciel de modulation de tension qui est exécuté par le microprocesseur de son unité de commande et de traitement UC pour commander une modulation de la tension aux bornes de toute la chaîne C1 de modules.

Dans une première solution représentée sur la figure 4, le système de surveillance comporte en outre un dispositif 11 spécifique, par exemple sous la forme d'une carte électronique, destiné à être commandé par le module logiciel de modulation de tension. Ce dispositif spécifique comporte deux interrupteurs SW1, SW2. Un premier interrupteur SW1 est relié en série avec la chaîne C1 de modules photovoltaïques et un deuxième interrupteur SW2 est placé en parallèle de la chaîne. En fonctionnement, c'est-à-dire en génération d'énergie, le premier interrupteur SW1 est à l'état fermé et le deuxième interrupteur SW2 est à l'état ouvert. Pour moduler la tension aux bornes de la chaîne C1, le module logiciel de modulation de tension est exécuté par l'unité de commande et de traitement UC pour mettre en oeuvre une séquence de commande spécifique des deux interrupteurs. Cette séquence est la suivante :

-    Ouverture du premier interrupteur SW1 pour déconnecter la chaîne C1 et ainsi la passer en mode circuit ouvert. La chaîne de modules est alors à la tension circuit ouvert Voc.

-    Fermeture du deuxième interrupteur SW2 pour court-circuiter la chaîne C1 de modules photovoltaïques et la mettre à une tension nulle.

-    Ouverture du deuxième interrupteur SW2 pour la remettre à la tension Voc.

En appliquant cette séquence, la chaîne C1 de modules photovoltaïques passe de la tension Voc à la tension nulle à chaque commutation du deuxième interrupteur SW2. Cette séquence sera mise en oeuvre le temps de la modulation.

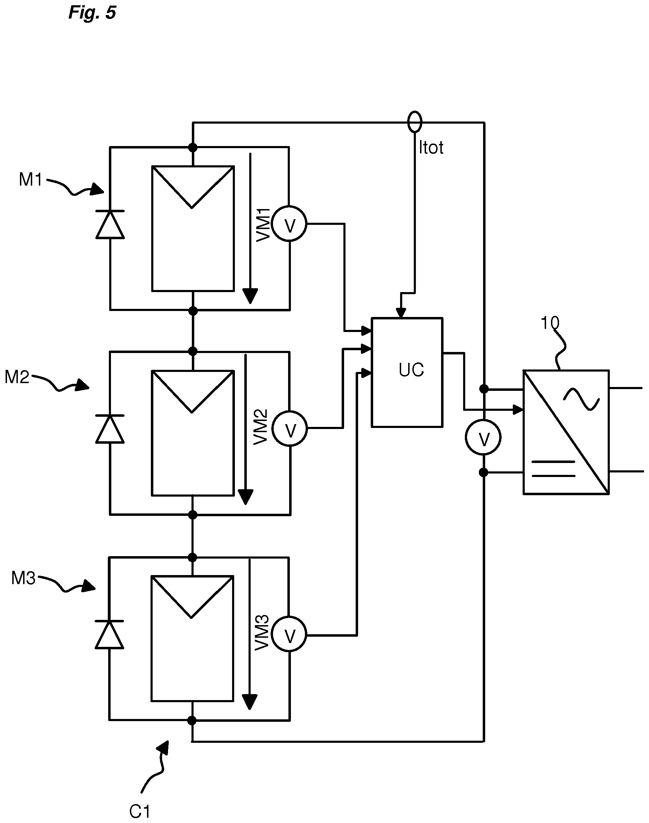

Dans une deuxième solution représentée sur la figure 5, le module logiciel de modulation de tension est exécuté par l'unité de commande et de traitement UC pour commander directement l'onduleur 10 de l'architecture. Dans cette solution, il s'agira par exemple de moduler la tension DC entre la valeur liée au point de puissance maximal (MPP) déjà évoqué ci-dessus et une valeur minimale ou maximale. Dans cette deuxième solution, la tension à l'entrée de l'onduleur est mesurée. Dans cette deuxième solution, on pourra considérer que l'onduleur 10 fait partie du dispositif de surveillance de l'invention.

Une troisième solution de modulation de la tension aux bornes de la chaîne est mise en oeuvre par la charge qui est connectée sur l'onduleur 10. Cette solution consiste essentiellement à faire varier la puissance côté AC en sortie de l'onduleur en fonction du besoin de la charge. Pour des systèmes isolés, cette variation de puissance en sortie entraîne une variation de la puissance côté DC de l'onduleur, et donc agit sur le couple Tension-Courant fourni par l'architecture photovoltaïque.

Quelle que soit la solution retenue, la modulation est faite au niveau de la chaîne C1, que ce soit par les interrupteurs SW1, SW2 du dispositif spécifique, qui permet de parcourir toute la plage de tension DC comme dans la première solution, par l'onduleur qui permet de parcourir une plage de la tension DC (en général, 50% à 100% de la tension circuit ouvert Voc de la chaîne) comme dans la deuxième solution ou par la charge comme dans la troisième solution. On verra qu'il n'est pas nécessaire de moduler la tension sur toute la plage de tension de la chaîne C1, pour conserver une capacité importante de détection de défauts sur les modules d'une chaîne. Moduler la tension sur une plage de tension réduite (référencée 12 sur les différentes figures) permet notamment d'utiliser directement l'onduleur 10 de l'architecture photovoltaïque sans ajouter un équipement supplémentaire (comme dans la première solution décrite ci-dessus). Un onduleur 10 utilisé dans une architecture photovoltaïque peut fonctionner sur une plage de tension DC à minima de 40% à 100% de la tension maximale autorisée de l'onduleur.

A partir de la modulation de la tension aux bornes de la chaîne, le procédé de l'invention consiste ensuite à recueillir différentes données pour construire la courbe I-V de chaque module Mi de la chaîne C1. Il est important de noter que la modulation réalisée par l'onduleur sur la chaîne de modules est mise en oeuvre sans déconnecter la chaîne ciblée, c'est-à-dire sans perturber son fonctionnement en génération d'électricité.

Le système de surveillance utilise préférentiellement les moyens de mesure de la tension décrits ci-dessus, installés sur l'architecture photovoltaïque pour mesurer la tension aux bornes de chaque module photovoltaïque de la chaîne lors de la modulation (Voltmètres aux bornes de chaque module photovoltaïque sur les figures 4 et 5). Toute autre solution d'acquisition des mesures de tension pourra cependant être employée. Ces moyens de mesure (indiqués par les Voltmètres sur les figures 3 et 4) sont formés de plusieurs capteurs de tension connectés chacun en parallèle d'un module photovoltaïque distinct de la chaîne.

Lors de la modulation de tensions aux bornes de la chaîne de modules photovoltaïques, l'unité de commande et de traitement UC acquiert ainsi les données de tension mesurées aux bornes de chaque module photovoltaïque Mi lors de la modulation (tensions VM1, VM2, VM3 figures 4 et 5). Les mesures de tension effectuées aux bornes de chaque module sont bien entendu synchronisées entre elles et avec la valeur de tension appliquée aux bornes de la chaîne de modules. Les mesures sont envoyées pour traitement dans l'unité de commande et de traitement UC. Un module logiciel spécifique de l'unité de commande et de traitement récupère ces données de mesure et les traite. L'unité de commande et de traitement UC obtient ainsi, pour chaque module photovoltaïque Mi de la chaîne C1, une courbe de tension en fonction du temps en cours de modulation.

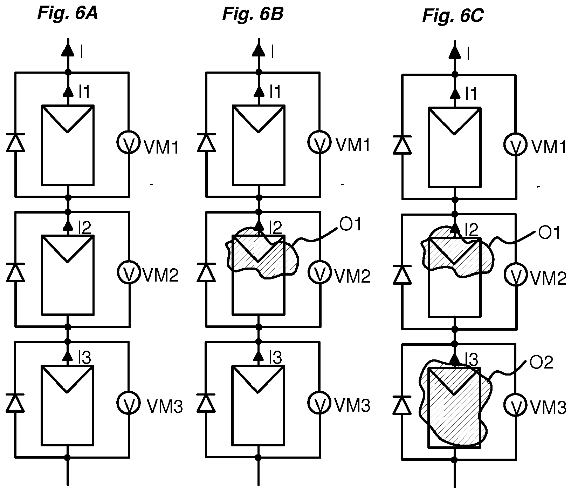

Bien entendu, selon l'état de fonctionnement de chaque module de la chaîne (c'est-à-dire sans défaut ou un défaut), la courbe de tension obtenue sera différente. A titre d'illustration, les figures 6A, 6B et 6C représentent une chaîne de modules photovoltaïques dans laquelle les modules photovoltaïques sont dans des états de fonctionnement différents.

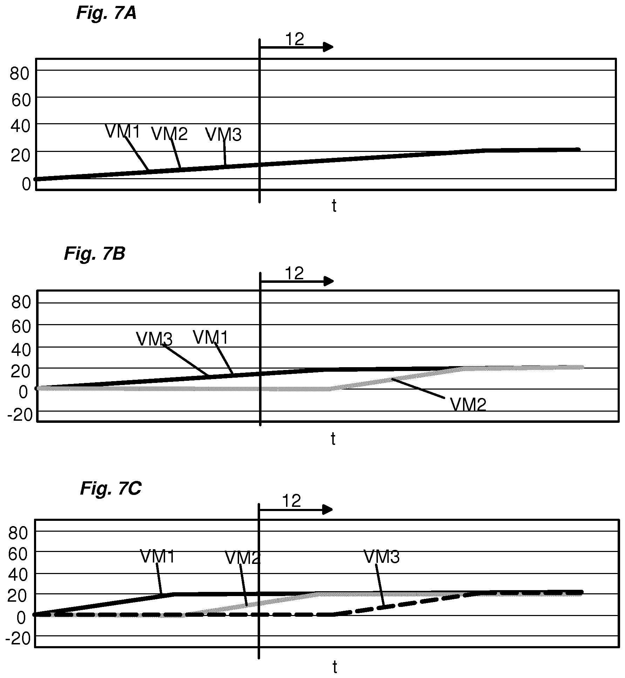

Sur la figure 6A, tous les modules M1, M2, M3 fonctionnent correctement. Sur la figure 7A, Les courbes des tensions VM1, VM2 et VM3 aux bornes de ces trois modules, obtenues lors de la modulation de tension aux bornes de la chaîne, ne présentent pas de défaut. Les modules étant tous les trois identiques, les courbes sont confondues.

Sur la figure 6B, le deuxième module M2 est masqué par un faible ombrage O1. On remarque donc sur la figure 7B que sa courbe de tension correspondante, obtenue lors de la modulation de tension, est plus basse et ne présente plus le même profil que celles des deux autres modules M1 et M3.

Sur la figure 6C, le deuxième module M2 reste masqué par un faible ombrage O1 et le module M3 est, pour sa part, masqué par un fort ombrage O2. Leurs courbes correspondantes représentées sur la figure 7C restent basses.

A partir de ces courbes, il apparaît donc clairement que les courbes temporelles de tension (VM1, VM2, VM3) sont identiques dès lors que les modules ont des caractéristiques similaires sur la plage de tension de la modulation de chaîne. Dès lors qu'un module présente un défaut (tel qu'un ombrage), sa courbe de tension est plus basse. Plus le défaut est marqué, plus sa courbe de tension sera basse. Il est possible de comparer les séries temporelles des tensions des modules entre elles pour comparer les performances des modules. Il est également possible de les comparer à une série temporelle de référence définie par Vtot(t)/N où Vtot est la série temporelle de tension totale de la chaîne de modules et N le nombre total de modules dans la chaîne.

Pour reconstruire la courbe I-V de chaque module, l'une des caractéristiques de l'invention consiste à limiter l'emploi de capteurs de courant. Pour cela, l'unité de commande et de traitement met en oeuvre un module logiciel d'estimation. Deux solutions distinctes d'estimation peuvent être mises en oeuvre par ce module logiciel :

- Une première solution permet de n'employer qu'un seul capteur de courant pour mesurer le courant total de l'architecture, et qui consiste à déterminer un courant moyen qui traverse la chaîne à partir du courant total mesuré et du nombre de chaînes dans l'architecture photovoltaïque. Cette solution présente notamment un intérêt lorsque l'architecture comporte plusieurs chaînes de modules photovoltaïques en parallèle (au moins deux chaînes).

- Une deuxième solution permet de se passer de toute mesure de courant au niveau de la chaîne.

La première solution d'estimation consiste donc à déterminer un courant moyen dans la chaîne ciblée. Pour cela, un capteur de courant est nécessaire pour mesurer le courant total Itot fourni par toutes les chaînes. Cette solution présente un intérêt particulier lorsque l'architecture comporte plusieurs chaînes C1, C2 de modules en parallèle car elle permet de n'utiliser qu'un capteur de courant pour toutes les chaînes (voir figure 1). Ce capteur du courant Itot a été représenté sur les figures 4 et 5. L'unité de commande et de traitement UC acquiert la valeur de courant total Itot au cours du temps. Le module d'estimation détermine ensuite un courant moyen qui circule dans chaque chaîne en divisant le courant total Itot mesuré par le nombre de chaînes de modules de l'architecture.

La deuxième solution d'estimation utilise une courbe référence de courant. Aucune mesure de courant n'est nécessaire pour sa mise en oeuvre.

Dans une première étape de cette deuxième solution, l'unité de commande et de traitement UC fait ainsi l'hypothèse que le module qui est identifié comme le plus performant (c'est-à-dire le module avec la tension la plus élevée au cours de la modulation - voir courbes sur les figures 7A à 7C) est complètement sain et qu'il est censé présenter une caractéristique I-V sans défaut. Si l'on considère par exemple la configuration de fonctionnement représentée sur la figure 6C, il s'agirait du module M1 puisque ce module présente la tension la plus haute (voir figure 7C).

L'unité de commande et de traitement UC utilise une courbe I-V de référence désignée Iref(Vref). Cette courbe de référence Iref(Vref) est pré-mémorisée dans les moyens de mémorisation de l'unité de commande et de traitement UC du système. Celle-ci pourra avoir été obtenue de différentes manières, par exemple par test au cours de la fabrication des modules ou par exemple juste après l'installation de l'architecture photovoltaïque lors d'une phase d'apprentissage. Toute autre solution pour obtenir cette courbe pourrait être envisagée. La courbe de référence choisie peut correspondre à n'importe quelles conditions d'irradiance et de température, dès lors qu'elle provient d'un module considéré sans défaut.

A partir de cette courbe de référence, l'unité de commande et de traitement UC peut ainsi générer une mesure temporelle de courant en fonction des tensions mesurées lors de la modulation, de manière à obtenir la courbe suivante pour chaque module :

$$I(t) = Iref(Vmes(t))$$

Pour mieux comprendre, le principe de fonctionnement est le suivant :

- L'unité de commande et de traitement UC détermine le module qui a la tension la plus élevée au cours de la modulation et considère qu'il s'agit d'un module sain de sorte que sa courbe I-V correspond à la courbe de référence mémorisée. Ce module est ainsi considéré comme le module de référence.
- A partir de la courbe de référence, l'unité de commande et de traitement détermine les valeurs du courant qui traverse la chaîne de modules photovoltaïques à tous les instants (t) de mesure lors de la modulation.
- Pour chaque module photovoltaïque, l'unité de commande et de traitement UC reconstruit la courbe I-V en associant les valeurs de tension obtenues à chaque instant (t) à la valeur correspondante de courant obtenue audit instant (t) à partir de la courbe de référence.
- Pour chaque module de la chaîne, l'unité de commande et de traitement génère ainsi la courbe :

$$I(t) = Iref(Vmes(t))$$

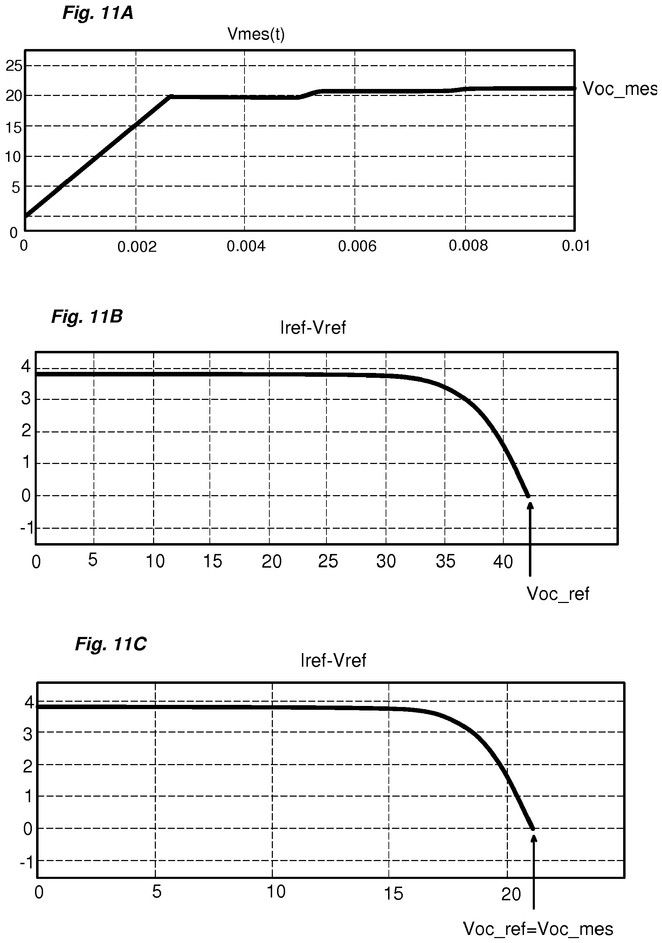

Avantageusement, pour s'assurer de la bonne génération des données de courant, l'unité de commande et de traitement UC effectue une transposition linéaire de la courbe de tension mesurée en fonction du temps pour le module de référence par rapport à la courbe de référence. Les courbes représentées sur les figures 11A, 11B et 11C permettent de mieux comprendre le principe de cette transposition linéaire. Pour cela, l'unité de commande et de traitement UC fait coïncider la tension circuit ouvert connue de la courbe de référence choisie (Voc_ref - figure 11B) avec la tension circuit ouvert Voc_mes (figure 11A) mesurée lors de la modulation pour le module de référence. La tension circuit ouvert Voc_mes correspond en effet à la valeur de tension la plus élevée mesurée lors de la modulation. La figure 11C montre ainsi la nouvelle courbe I-V de référence obtenue après transposition. Cette transposition consiste ainsi à appliquer l'expression suivante :

$$Vref = Vmes \times Voc\_ref / Voc\_mes$$

On a ainsi l'expression suivante du courant en fonction du temps lors de la modulation :

$$I(t) = Iref(Voc\_ref / Voc_{mes} * Vmes(t))$$

Avec :

- Iref(Vref) est une caractéristique I(V) d'un module sans défaut de la même technologie et possédant les mêmes spécifications techniques que le module considéré comme sain dans la chaîne de modules,
- Iref le courant en Ampère de la courbe de référence choisie,
- Vref la tension en Volt de la courbe de référence choisie,
- Vmes(t) est la mesure temporelle de tension (en Volt) en cours de modulation du module considéré comme sain dans la chaîne,
- Voc_ref et Voc_mes sont les tensions circuit-ouvert (en Volt), respectivement pour la courbe de référence et pour le module considéré comme sain dans la chaîne.

Cette solution permet ainsi à l'unité de commande et de traitement UC de générer des courbes I-V pour chaque module, sans avoir recours à des mesures de courant. A partir de la courbe obtenue pour chaque module Mi de la chaîne, l'unité de commande et de traitement UC sera en mesure de détecter un défaut sur le module surveillé. Un module logiciel de détection de défaut est alors exécuté pour traiter la courbe I-V obtenue pour chaque module photovoltaïque. Ce module met en oeuvre des techniques de traitement bien connues. Il s'agira notamment d'effectuer des opérations de filtrage, lissage et de calculs de dérivés première et seconde. Ces opérations étant bien connues, elles ne sont pas détaillées dans la présente demande.

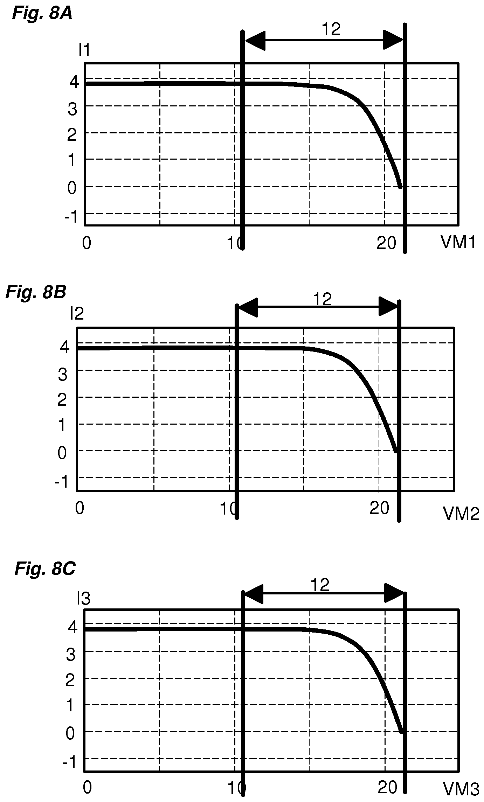

Les figures 8A à 8C représentent les courbes I-V des trois modules dans le premier cas de fonctionnement de la figure 6A. Les trois modules étant sans défaut, le trois courbes I-V pour les trois modules sont quasi-identiques.

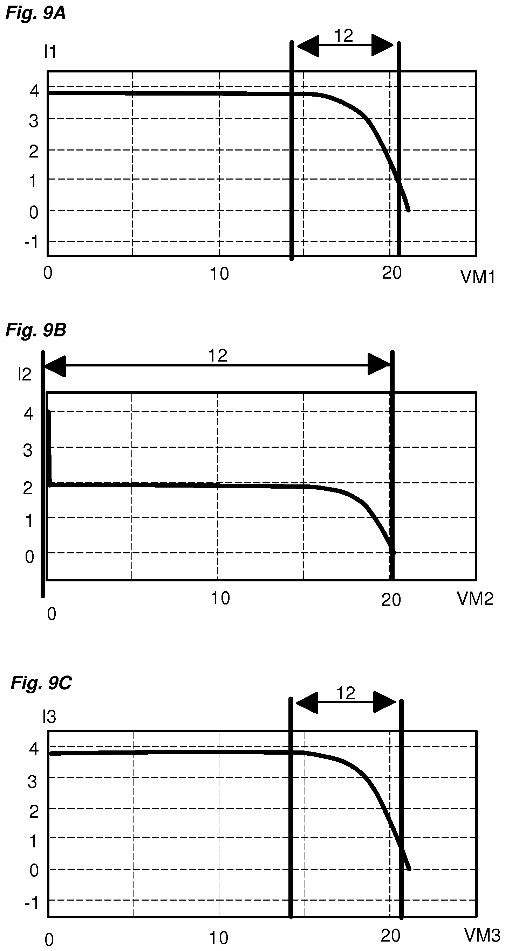

Les figures 9A à 9C représentent les courbes I-V des trois modules dans le deuxième cas de fonctionnement de la figure 6B. Dans ce deuxième cas de fonctionnement, le deuxième module présentant un faible ombrage, sa courbe I-V est plus basse que celles des deux autres modules sans défaut.

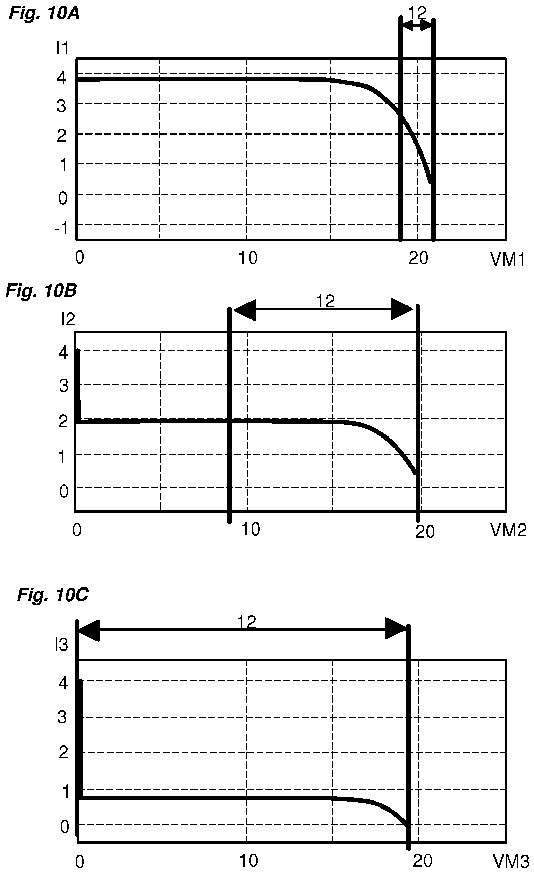

Les figures 10A à 10C représentent les courbes I-V des trois modules dans le troisième cas de fonctionnement de la figure 6C. Dans ce troisième cas, le troisième module présente un fort ombrage. Sa courbe I-V est donc encore plus basse que celle associée au deuxième module.

Selon différentes variantes de réalisation, en appliquant les différentes étapes décrites ci-dessus, l'unité de commande et de traitement UC met en oeuvre la surveillance des modules d'une chaîne de manière périodique (par exemple toutes les heures) ou de manière apériodique.

Comme déjà précisé ci-dessus, la modulation de tension appliquée à la chaîne de modules photovoltaïques peut être mise en oeuvre sur une plage de tension 12 réduite en utilisant directement l'onduleur, sans équipement spécifique, la plage de tension étant préférentiellement comprise entre 50% et 100% de la tension en circuit ouvert de la chaîne de modules photovoltaïques.

Il apparaît en effet qu'il est possible de faire une mesure suffisante de la caractéristique I-V d'un module, même lorsque la plage de tension 12 de chaîne sur laquelle la modulation est possible est réduite. Plus le module est "sain", moins la variation de tension sur ce module est grande et, inversement, moins le module est "sain", plus la variation de tension sur ce module est grande. Ainsi, lors de la modulation de la tension au niveau de la chaîne de modules photovoltaïques, un module de la chaîne qui présente un défaut se caractérise donc par une variation forte de la tension à ses bornes et un module sans défaut se caractérise par une variation faible de tension à ses bornes.

Selon la plage sur laquelle la tension est modulée aux bornes de la chaîne de modules photovoltaïques, le nombre de modules en défaut qu'il est possible de détecter pourra varier. La démonstration qui suit permet de déterminer le nombre de modules en défaut que l'unité de commande et de traitement UC peut détecter sur la plage de modulation de tension aux bornes de la chaîne allant de Vtot_min à Vtot_max.

On considère une chaîne de N modules, pouvant atteindre chacun une tension maximale Voc (tension circuit ouvert) lorsqu'ils sont sans défaut. L'onduleur 10 présente une capacité de modulation ayant une limite basse à une tension Vtot_min à laquelle on souhaite pouvoir détecter des défauts sur les modules. On considère également qu'un module en défaut présente une tension à ses bornes égale à Vmin. On a ainsi l'expression générale suivante :

$$Vtot\_min = V\ des\ modules\ sans\ défaut + V\ des\ modules\ avec\ défauts$$

Avec :

- *V des modules sans défau*t, qui correspond à la tension totale des modules sans défaut sur la chaîne lors de la modulation à Vtot_min.
- *V des modules avec défaut,* qui correspond à la tension totale des modules qui présentent un défaut dans la chaîne lors de la modulation à Vtot_min.

En l'exprimant d'une autre manière, cela revient à l'expression suivante :

$$Vtot_{min} = (N - Mdéfauts) \times VmodOK + \sum VmodNOK$$

Avec :

- *N* le nombre total de modules dans la chaîne.
- *Mdéfauts,* le nombre total de modules de la chaîne qui présente un défaut.
- *VmodOK,* la tension aux bornes de chaque module sans défaut.
- *VmodNOK,* la tension aux bornes de chaque module en défaut.

On obtient ainsi :

$$N * VmodOK - Vtot\_min = Mdéfauts * VmodOK - \sum VmodNOK$$

Comme *VmodOK ≤ Voc,* on obtient :

$$Mdéfauts * VmodOK - \sum VmodNOK \leq N * Voc - Vtot\_min$$

Comme par ailleurs, on souhaite que *VmodNOK* ≤ *Vmin* alors on obtient :

$$M\acute{e}fauts * VmodOK - \sum VmodNOK \geq M\acute{e}fauts * VmodOK - M\acute{e}fauts * Vmin$$

Par conséquent, on trouve :

$$M\acute{e}fauts * (VmodOK - Vmin) \leq N * Voc - Vtot\_min$$

Soit :

$$M\acute{e}fauts \leq (N * Voc - Vtot\_min)/(VmodOK - Vmin)$$

En considérant que *VmodOK* = *Voc* et *Vmin* = 0, il est alors possible pour l'unité de commande et de traitement UC d'identifier jusqu'à (*N* - *Vtot_min*/*Voc*) modules défectueux. Autrement dit, si on suppose que les modules en défaut atteignent une tension nulle pendant que les autres restent à la tension Voc lorsque la tension aux bornes de la chaîne est minimale (c'est-à-dire égale à Vtot_min) alors on peut identifier jusqu'à un nombre Mdéfauts de modules défectueux dans une chaîne de N modules, tel que (*N* - *M défauts*) * *Voc* = *Vtot_min* soit *Mdéfauts* ≤ (*N* - *Vtot-min*/*Voc*).

En effet, on peut considérer qu'en atteignant Vtot_min sur toute la chaîne de modules, alors les modules sans défaut seront toujours à une tension Voc alors que les autres auraient atteint la tension Vmin. Plus basse est la tension Vmin à atteindre pour un module en défaut, plus faible sera le nombre de modules en défaut qu'il sera possible de détecter.

Lorsque l'unité de commande et de traitement UC commande la modulation de tension sur une plage de tension 12 réduite, elle est apte à déterminer cette plage en tenant compte du nombre Mdéfauts défini ci-dessus. Cette plage de tension sera par exemple comprise entre 50 et 100% de la tension de la tension en circuit ouvert de la chaîne de modules photovoltaïques.

Le procédé et le système de surveillance de l'invention présentent ainsi plusieurs avantages parmi lesquels :

- La méthode employée permet notamment de se passer de capteur de courant au niveau de chaque module.
- La modulation de la tension est réalisée au niveau de la chaîne dans sa totalité et non au niveau de chaque module, ce qui évite l'emploi d'un équipement de modulation au niveau de chaque module.
- La modulation peut être mise en oeuvre au niveau de la chaîne de module, en employant l'onduleur, évitant l'emploi d'une carte spécifique.
- Peu de pertes de production électrique pendant la phase de surveillance.
- Pas de perturbation de l'onduleur.
- Coût faible, maintenance limitée et plus faible risque de pannes, car peu d'équipements employés pour la mise en oeuvre du procédé.

**Revendications**

1. Procédé de surveillance et de diagnostic d'une architecture photovoltaïque comportant au moins une chaîne (C1) de plusieurs modules photovoltaïques (M1, M2, M3) connectés en série, chaque module photovoltaïque comportant plusieurs cellules photovoltaïques, ladite chaîne étant connectée à un convertisseur de tension, ledit procédé étant **caractérisé en ce qu'**il comporte les étapes ci-dessous :

   - Une étape de surveillance de la tension aux bornes de chaque module de la chaîne de manière à générer pour chaque module un profil de tension en fonction du temps,
   - Une étape de modulation de la tension aux bornes de la chaîne de modules photovoltaïques déclenchée lorsque la tension surveillée aux bornes d'un module de la chaîne dépasse un seuil d'écart de tension déterminé,
   - Une étape d'acquisition de valeurs de la tension (VM1, VM2, VM3) aux bornes de chaque module photovoltaïque de la chaîne de modules photovoltaïques en cours de modulation de manière à obtenir un profil de variation de tension aux bornes de chaque module photovoltaïque en fonction du temps,
   - Une étape d'estimation du courant circulant à travers ladite chaîne de modules photovoltaïques en fonction du temps lors de la modulation,
   - Une étape de détermination d'une courbe Courant-Tension pour chaque module photovoltaïque de la chaîne de modules photovoltaïques,
- Une étape de détermination d'un type de défaut par analyse de la courbe de Courant-Tension obtenue.

2. Procédé selon la revendication 1, **caractérisé en ce que** l'étape d'estimation du courant circulant à travers ladite chaîne de modules photovoltaïques en fonction du temps lors de la modulation comporte :

- Une étape d'acquisition du courant total circulant dans l'architecture photovoltaïque,
- Une étape de détermination d'un courant moyen circulant dans ladite chaîne de modules photovoltaïques à l'aide dudit courant total acquis et du nombre de chaînes de modules photovoltaïques présentes dans l'architecture.

3. Procédé selon la revendication 1, **caractérisé en ce que** l'étape d'estimation du courant comporte :

- Une étape de détermination d'un module de référence parmi les modules (M1, M2, M3) de la chaîne de modules photovoltaïques,
- Une étape de détermination d'une courbe Courant-Tension de référence pré-mémorisée pour ledit module choisi comme module de référence,
- Une étape de détermination du courant à chaque instant lors de l'étape de modulation à partir de ladite courbe Courant-Tension de référence et de la tension mesurée aux bornes dudit module de référence.

4. Procédé selon la revendication 3, **caractérisé en ce que** l'étape de détermination du module de référence est mise en oeuvre par comparaison des valeurs maximales de tension aux bornes de chaque module de la chaîne de modules photovoltaïques.

5. Procédé selon l'une des revendications 1 à 4, **caractérisé en ce que** ladite étape de modulation de la tension est mise en oeuvre par commande dudit convertisseur (10) sur une plage de tension réduite, entre une valeur minimale (Vtot_min) supérieure à zéro et une valeur maximale (Vtot_max) supérieure à ladite valeur minimale.

6. Procédé selon la revendication 5, **caractérisé en ce que** ladite plage de tension réduite est comprise entre 50% et 100% de la tension en circuit ouvert de la chaîne de modules photovoltaïques.

7. Procédé selon la revendication 5, **caractérisé en ce que** ladite valeur de tension minimale de la plage de tension réduite de modulation est déterminée à partir du nombre de modules défectueux qu'il est possible de détecter dans ladite chaîne de modules photovoltaïques.

8. Procédé selon la revendication 5, **caractérisé en ce qu'**il comporte une étape de détermination du nombre de défauts à identifier à partir de ladite valeur minimale (Vtot_min) de tension que ledit convertisseur peut fournir.

9. Procédé selon l'une des revendications 1 à 8, **caractérisé en ce que** lesdites valeurs de tension aux bornes de chaque module sont obtenues lors d'une étape de mesure de la tension par un capteur de tension positionné aux bornes de chaque module photovoltaïque.

10. Système de surveillance et de diagnostic d'une architecture photovoltaïque comportant au moins une chaîne (C1) de plusieurs modules photovoltaïques (M1, M2, M3) connectés en série, chaque module photovoltaïque comportant plusieurs cellules photovoltaïques, ladite chaîne (C1) étant connectée à un convertisseur de tension, ledit système comportant une unité de commande et de traitement (UC) **caractérisée en ce qu'**elle comporte :

- Un module de surveillance de la tension aux bornes de chaque module de la chaîne de manière à générer pour chaque module un profil de tension en fonction du temps,
- Un module logiciel de commande d'une modulation de la tension aux bornes de la chaîne de modules photovoltaïques activée lorsque la tension surveillée aux bornes d'un module de la chaîne dépasse un seuil d'écart de tension déterminé,
- Un module logiciel d'acquisition de valeurs de tension (VM1, VM2, VM3) aux bornes de chaque module photovoltaïque de la chaîne de modules photovoltaïques en cours de modulation de manière à obtenir un profil de variation de tension aux bornes de chaque module photovoltaïque en fonction du temps,
- Un module logiciel d'estimation du courant circulant à travers ladite chaîne de modules photovoltaïques en fonction du temps lors de la modulation,
- Un module logiciel de détermination d'une courbe Courant-Tension pour chaque module photovoltaïque de la chaîne de modules photovoltaïques
- Un module logiciel de détermination d'un type de défaut par analyse de la courbe de Courant-Tension obtenue.

**11.** Système selon la revendication 10, **caractérisé en ce que** le module d'estimation du courant circulant à travers ladite chaîne de modules photovoltaïques en fonction du temps lors de la modulation comporte :

- Un module d'acquisition du courant total circulant dans l'architecture photovoltaïque,
- Un module de détermination d'un courant moyen circulant dans ladite chaîne de modules photovoltaïques à l'aide dudit courant total acquis et du nombre de chaînes de modules photovoltaïques présentes dans l'architecture.

**12.** Système selon la revendication 10, **caractérisé en ce que** ledit module d'estimation du courant comporte :

- Un module logiciel de détermination d'un module de référence parmi les modules photovoltaïques de la chaîne de modules photovoltaïques,
- Un module logiciel de détermination d'une courbe Courant-Tension de référence pré-mémorisée pour ledit module choisi comme module de référence,
- Un module logiciel de détermination du courant à chaque instant à partir de ladite courbe Courant-Tension de référence et de la tension mesurée aux bornes dudit module de référence.

**13.** Système selon la revendication 12, **caractérisé en ce que** le module logiciel de détermination du module de référence comporte un module logiciel de comparaison des valeurs maximales de tension aux bornes de chaque module de la chaîne de modules photovoltaïques.

**14.** Système selon l'une des revendications 10 à 13, **caractérisé en ce que** ledit module logiciel de commande de la modulation de la tension est agencé pour commander le convertisseur sur une plage de tension réduite entre une valeur minimale (Vtot_min) supérieure à zéro et une valeur maximale (Vtot_max) supérieure à ladite valeur minimale.

**15.** Système selon la revendication 14, **caractérisé en ce que** ladite plage de tension réduite est comprise entre 50% et 100% de la tension en circuit ouvert de la chaîne de modules photovoltaïques.

**16.** Système selon la revendication 14, **caractérisé en ce que** ladite valeur de tension minimale de la plage de tension réduite de modulation est déterminée à partir du nombre de modules défectueux qu'il est possible de détecter dans ladite chaîne de modules photovoltaïques.

**17.** Système selon la revendication 14, **caractérisé en ce qu'**il comporte un module de détermination du nombre de défauts à identifier à partir de ladite valeur minimale (Vtot_min) de tension que ledit convertisseur peut fournir.

**18.** Système selon l'une des revendications 10 à 17, **caractérisé en ce qu'**il comporte des moyens de mesure de la tension aux bornes de chaque module photovoltaïque de la chaîne.

**19.** Programme d'ordinateur comprenant des modules logiciels destinés à être exécuté par une unité de commande et de traitement (UC) de manière à mettre en oeuvre le procédé tel que défini dans l'une des revendications 1 à 9.

**20.** Support de stockage lisible par une unité de commande et de traitement comportant le programme d'ordinateur défini dans la revendication 19.

**Patentansprüche**

**1.** Verfahren zur Überwachung und Diagnose einer Fotovoltaikarchitektur, welche wenigstens eine Kette (C1) von mehreren in Reihe geschalteten Fotovoltaikmodulen (M1, M2, M3) aufweist, wobei jedes Fotovoltaikmodul mehrere Fotovoltaikzellen aufweist, wobei die Kette mit einem Spannungswandler verbunden ist, wobei das Verfahren **dadurch gekennzeichnet ist, dass** es die folgenden Schritte umfasst:

- einen Schritt der Überwachung der Spannung an den Klemmen jedes Moduls der Kette, um so für jedes Modul ein Profil der Spannung in Abhängigkeit von der Zeit zu erzeugen,
- einen Schritt der Modulation der Spannung an den Klemmen der Kette von Fotovoltaikmodulen, der ausgelöst wird, wenn die überwachte Spannung an den Klemmen eines Moduls der Kette einen bestimmten Schwellenwert der Spannungsabweichung überschreitet,

- einen Schritt der Erfassung von Werten der Spannung (VM1, VM2, VM3) an den Klemmen jedes Fotovoltaikmoduls der Kette von Fotovoltaikmodulen im Verlauf der Modulation, um so ein Profil der Spannungsänderung an den Klemmen jedes Fotovoltaikmoduls in Abhängigkeit von der Zeit zu erhalten,

- einen Schritt der Schätzung des Stroms, der durch die Kette von Fotovoltaikmodulen fließt, in Abhängigkeit von der Zeit während der Modulation,

- einen Schritt der Bestimmung einer Strom-Spannungs-Kurve für jedes Fotovoltaikmodul der Kette von Fotovoltaikmodulen,

- einen Schritt der Bestimmung einer Fehlerart durch Analyse der erhaltenen Strom-Spannungs-Kurve.

2. Verfahren nach Anspruch 1, **dadurch gekennzeichnet, dass** der Schritt der Schätzung des Stroms, der durch die Kette von Fotovoltaikmodulen fließt, in Abhängigkeit von der Zeit während der Modulation umfasst:

- einen Schritt der Erfassung des Gesamtstroms, der in der Fotovoltaikarchitektur fließt,
- einen Schritt der Bestimmung eines mittleren Stroms, der in der Kette von Fotovoltaikmodulen fließt, mithilfe des erfassten Gesamtstroms und der Anzahl der Ketten von Fotovoltaikmodulen, die in der Architektur vorhanden sind.

3. Verfahren nach Anspruch 1, **dadurch gekennzeichnet, dass** der Schritt der Schätzung des Stroms umfasst:

- einen Schritt der Bestimmung eines Referenzmoduls unter den Modulen (M1, M2, M3) der Kette von Fotovoltaikmodulen,
- einen Schritt der Bestimmung einer vorgespeicherten Referenz-Strom-Spannungs-Kurve für das als Referenzmodul gewählte Modul,
- einen Schritt der Bestimmung des Stroms zu jedem Zeitpunkt während des Schrittes der Modulation anhand der Referenz-Strom-Spannungs-Kurve und der an den Klemmen des Referenzmoduls gemessenen Spannung.

4. Verfahren nach Anspruch 3, **dadurch gekennzeichnet, dass** der Schritt der Bestimmung des Referenzmoduls durch Vergleich der maximalen Spannungswerte an den Klemmen jedes Moduls der Kette von Fotovoltaikmodulen durchgeführt wird.

5. Verfahren nach einem der Ansprüche 1 bis 4, **dadurch gekennzeichnet, dass** der Schritt der Modulation der Spannung durch Steuerung des Wandlers (10) auf einem reduzierten Spannungsbereich durchgeführt wird, zwischen einem minimalen Wert (Vtot_min), der größer als null ist, und einem maximalen Wert (Vtot_max), der größer als der minimale Wert ist.

6. Verfahren nach Anspruch 5, **dadurch gekennzeichnet, dass** der reduzierte Spannungsbereich zwischen 50 % und 100 % der Leerlaufspannung der Kette von Fotovoltaikmodulen liegt.

7. Verfahren nach Anspruch 5, **dadurch gekennzeichnet, dass** der minimale Spannungswert des reduzierten Spannungsbereichs der Modulation anhand der Anzahl defekter Module bestimmt wird, welche in der Kette von Fotovoltaikmodulen erkannt werden können.

8. Verfahren nach Anspruch 5, **dadurch gekennzeichnet, dass** es einen Schritt der Bestimmung der Anzahl von Fehlern umfasst, die anhand des minimalen Spannungswertes (Vtot_min), den der Wandler liefern kann, zu identifizieren sind.

9. Verfahren nach einem der Ansprüche 1 bis 8, **dadurch gekennzeichnet, dass** die Spannungswerte an den Klemmen jedes Moduls in einem Schritt der Messung der Spannung durch einen Spannungssensor erhalten werden, der an den Klemmen jedes Fotovoltaikmoduls positioniert ist.

10. System zur Überwachung und Diagnose einer Fotovoltaikarchitektur, welche wenigstens eine Kette (C1) von mehreren in Reihe geschalteten Fotovoltaikmodulen (M1, M2, M3) aufweist, wobei jedes Fotovoltaikmodul mehrere Fotovoltaikzellen aufweist, wobei die Kette (C1) mit einem Spannungswandler verbunden ist, wobei das System eine Steuerungs- und Verarbeitungseinheit (UC) aufweist, **dadurch gekennzeichnet, dass** sie umfasst:

- ein Modul zur Überwachung der Spannung an den Klemmen jedes Moduls der Kette, um so für jedes Modul ein Profil der Spannung in Abhängigkeit von der Zeit zu erzeugen,

- ein Softwaremodul zur Steuerung einer Modulation der Spannung an den Klemmen der Kette von Fotovoltaikmodulen, die aktiviert wird, wenn die überwachte Spannung an den Klemmen eines Moduls der Kette einen bestimmten Schwellenwert der Spannungsabweichung überschreitet,

- ein Softwaremodul zur Erfassung von Werten der Spannung (VM1, VM2, VM3) an den Klemmen jedes Fotovoltaikmoduls der Kette von Fotovoltaikmodulen im Verlauf der Modulation, um so ein Profil der Spannungsänderung an den Klemmen jedes Fotovoltaikmoduls in Abhängigkeit von der Zeit zu erhalten,

- ein Softwaremodul zur Schätzung des Stroms, der durch die Kette von Fotovoltaikmodulen fließt, in Abhängigkeit von der Zeit während der Modulation,

- ein Softwaremodul zur Bestimmung einer Strom-Spannungs-Kurve für jedes Fotovoltaikmodul der Kette von Fotovoltaikmodulen,

- ein Softwaremodul zur Bestimmung einer Fehlerart durch Analyse der erhaltenen Strom-Spannungs-Kurve.

11. System nach Anspruch 10, **dadurch gekennzeichnet, dass** das Modul zur Schätzung des Stroms, der durch die Kette von Fotovoltaikmodulen fließt, in Abhängigkeit von der Zeit während der Modulation umfasst:

- ein Modul zur Erfassung des Gesamtstroms, der in der Fotovoltaikarchitektur fließt,

- ein Modul zur Bestimmung eines mittleren Stroms, der in der Kette von Fotovoltaikmodulen fließt, mithilfe des erfassten Gesamtstroms und der Anzahl der Ketten von Fotovoltaikmodulen, die in der Architektur vorhanden sind.

12. System nach Anspruch 10, **dadurch gekennzeichnet, dass** das Modul zur Schätzung des Stroms umfasst:

- ein Softwaremodul zur Bestimmung eines Referenzmoduls unter den Fotovoltaikmodulen der Kette von Fotovoltaikmodulen,

- ein Softwaremodul zur Bestimmung einer vorgespeicherten Referenz-Strom-Spannungs-Kurve für das als Referenzmodul gewählte Modul,

- ein Softwaremodul zur Bestimmung des Stroms zu jedem Zeitpunkt anhand der Referenz-Strom-Spannungs-Kurve und der an den Klemmen des Referenzmoduls gemessenen Spannung.

13. System nach Anspruch 12, **dadurch gekennzeichnet, dass** das Softwaremodul zur Bestimmung des Referenzmoduls ein Softwaremodul zum Vergleich der maximalen Spannungswerte an den Klemmen jedes Moduls der Kette von Fotovoltaikmodulen umfasst.

14. System nach einem der Ansprüche 10 bis 13, **dadurch gekennzeichnet, dass** das Softwaremodul zur Steuerung der Modulation der Spannung dafür ausgelegt ist, den Wandler auf einem reduzierten Spannungsbereich zwischen einem minimalen Wert (Vtot_min), der größer als null ist, und einem maximalen Wert (Vtot_max), der größer als der minimale Wert ist, zu steuern.

15. System nach Anspruch 14, **dadurch gekennzeichnet, dass** der reduzierte Spannungsbereich zwischen 50 % und 100 % der Leerlaufspannung der Kette von Fotovoltaikmodulen liegt.

16. System nach Anspruch 14, **dadurch gekennzeichnet, dass** der minimale Spannungswert des reduzierten Spannungsbereichs der Modulation anhand der Anzahl defekter Module bestimmt wird, welche in der Kette von Fotovoltaikmodulen erkannt werden können.

17. System nach Anspruch 14, **dadurch gekennzeichnet, dass** es ein Modul zur Bestimmung der Anzahl von Fehlern umfasst, die anhand des minimalen Spannungswertes (Vtot_min), den der Wandler liefern kann, zu identifizieren sind.

18. System nach einem der Ansprüche 10 bis 17, **dadurch gekennzeichnet, dass** es Mittel zur Messung der Spannung an den Klemmen jedes Fotovoltaikmoduls der Kette umfasst.

19. Computerprogramm, welches Softwaremodule umfasst, die dazu bestimmt sind, von einer Steuerungs- und Verarbeitungseinheit (UC) ausgeführt zu werden, um das Verfahren durchzuführen, das in einem der Ansprüche 1 bis 9 definiert ist.

20. Speichermedium, das von einer Steuerungs- und Verarbeitungseinheit lesbar ist und das in Anspruch 19 definierte Computerprogramm umfasst.

**Claims**

1. Method for monitoring and diagnosing a photovoltaic architecture comprising at least one string (C1) of a plurality of photovoltaic modules (M1, M2, M3) that are connected in series, each photovoltaic module comprising a plurality of photovoltaic cells, said string being connected to a voltage converter, said method being **characterized in that** it comprises the following steps:

   - A step of monitoring the voltage across the terminals of each module of the string so as to generate, for each module, a profile of voltage as a function of time,
   - A step of modulating the voltage across the terminals of the string of photovoltaic modules, which is triggered when the monitored voltage across the terminals of a module of the string exceeds a set voltage discrepancy threshold,
   - A step of acquiring values of the voltage (VM1, VM2, VM3) across the terminals of each photovoltaic module of the string of photovoltaic modules during the modulation so as to obtain a profile of the variation in the voltage across the terminals of each photovoltaic module as a function of time,
   - A step of estimating the current flowing through said string of photovoltaic modules as a function of time during the modulation,
   - A step of determining a current-voltage curve for each photovoltaic module of the string of photovoltaic modules,
   - A step of determining a type of fault by analysing the obtained current-voltage curve.

2. Method according to Claim 1, **characterized in that** the step of estimating the current flowing through said string of photovoltaic modules as a function of time during the modulation comprises:

   - A step of acquiring the total current flowing through the photovoltaic architecture,
   - A step of determining an average current flowing through said string of photovoltaic modules using said acquired total current and the number of strings of photovoltaic modules present in the architecture.

3. Method according to Claim 1, **characterized in that** the step of estimating the current comprises:

   - A step of determining one reference module among the modules (M1, M2, M3) of the string of photovoltaic modules,
   - A step of determining a reference current-voltage curve for said module chosen as reference module, said reference current-voltage curve having been stored in memory beforehand,
   - A step of determining the current at every time during the modulating step on the basis of said reference current-voltage curve and of the voltage measured across the terminals of said reference module.

4. Method according to Claim 3, **characterized in that** the step of determining the reference module is carried out by comparing maximum values of the voltage across the terminals of each module of the string of photovoltaic modules.

5. Method according to one of Claims 1 to 4, **characterized in that** said step of modulating the voltage is carried out by controlling said converter (10) in a decreased voltage range, between a minimum value (Vtot_min) higher than zero and a maximum value (Vtot_max) higher than said minimum value.

6. Method according to Claim 5, **characterized in that** said decreased voltage range is comprised between 50% and 100% of the open-circuit voltage of the string of photovoltaic modules.

7. Method according to Claim 5, **characterized in that** said minimum voltage value of the decreased modulation voltage range is determined on the basis of the number of faulty modules this it is possible to detect in said string of photovoltaic modules.

8. Method according to Claim 5, **characterized in that** it includes a step of determining the number of faults to be identified on the basis of said minimum voltage value (Vtot_min) that said converter is able to deliver.

9. Method according to one of Claims 1 to 8, **characterized in that** said voltage values across the terminals of each module are obtained in a step of measuring the voltage by a voltage sensor positioned across the terminals of each photovoltaic module.

10. System for monitoring and diagnosing a photovoltaic architecture comprising at least one string (C1) of a plurality of photovoltaic modules (M1, M2, M3) that are connected in series, each photovoltaic module comprising a plurality of photovoltaic cells, said string (C1) being connected to a voltage converter, said system comprising a control and processing unit (UC) **characterized in that** it comprises the following steps:

- A module for monitoring the voltage across the terminals of each module of the string so as to generate, for each module, a profile of voltage as a function of time,
- A software module for controlling a modulation of the voltage across the terminals of the string of photovoltaic modules, which is activated when the monitored voltage across the terminals of a module of the string exceeds a set voltage discrepancy threshold,
- A software module for acquiring values of the voltage (VM1, VM2, VM3) across the terminals of each photovoltaic module of the string of photovoltaic modules during the modulation so as to obtain a profile of the variation in the voltage across the terminals of each photovoltaic module as a function of time,
- A software module for estimating the current flowing through said string of photovoltaic modules as a function of time during the modulation,
- A software module for determining a current-voltage curve for each photovoltaic module of the string of photovoltaic modules,
- A software module for determining a type of fault by analysing the obtained current-voltage curve.

11. System according to Claim 10, **characterized in that** the module for estimating the current flowing through said string of photovoltaic modules as a function of time during the modulation comprises:

- A module for acquiring the total current flowing through the photovoltaic architecture,
- A module for determining an average current flowing through said string of photovoltaic modules using said acquired total current and the number of strings of photovoltaic modules present in the architecture.

12. System according to Claim 10, **characterized in that** said module for estimating the current comprises:

- A software module for determining one reference module among the photovoltaic modules of the string of photovoltaic modules,
- A software module for determining a reference current-voltage curve for said module chosen as reference module, said reference current-voltage curve having been stored in memory beforehand,
- A software module for determining the current at every time on the basis of said reference current-voltage curve and of the voltage measured across the terminals of said reference module.

13. System according to Claim 12, **characterized in that** the software module for determining the reference module comprises a software module for comparing maximum values of the voltage across the terminals of each module of the string of photovoltaic modules.

14. System according to one of Claims 10 to 13, **characterized in that** said software module for controlling the modulation of the voltage is arranged to control the converter in a decreased voltage range between a minimum value (Vtot_min) higher than zero and a maximum value (Vtot_max) higher than said minimum value.

15. System according to Claim 14, **characterized in that** said decreased voltage range is comprised between 50% and 100% of the open-circuit voltage of the string of photovoltaic modules.

16. System according to Claim 14, **characterized in that** said minimum voltage value of the decreased modulation voltage range is determined on the basis of the number of faulty modules that it is possible to detect in said string of photovoltaic modules.

17. Method according to Claim 14, **characterized in that** it includes a module for determining the number of faults to be identified on the basis of said minimum voltage value (Vtot_min) that said converter is able to deliver.

18. System according to one of Claims 10 to 17, **characterized in that** it comprises means for measuring the voltage across the terminals of each photovoltaic module of the string.

19. Computer program comprising software modules intended to be executed by a control and processing unit (UC) so as to implement the method such as defined in one of claims 1 to 9.

20. Storage medium readable by a control and processing unit comprising the computer program defined in Claim 19.

**Fig. 1**

**Fig. 2**

**Fig. 3**

**Fig. 4**

*Fig. 5*

Fig. 6A

Fig. 6B

Fig. 6C

*Fig. 7A*

*Fig. 7B*

*Fig. 7C*

Fig. 8A

Fig. 8B

Fig. 8C

**Fig. 9A**

**Fig. 9B**

**Fig. 9C**

Fig. 10A

Fig. 10B

Fig. 10C

*Fig. 11A*

Vmes(t)

Voc_mes

*Fig. 11B*

Iref-Vref

Voc_ref

*Fig. 11C*

Iref-Vref

Voc_ref=Voc_mes

## RÉFÉRENCES CITÉES DANS LA DESCRIPTION

**Documents brevets cités dans la description**

- US 2012215372 A
- US 2015094967 A1
- WO 2012128807 A1
- FR 2956213 A1
- WO 2010118952 A1
- US 9048781 B2
- US 2014266294 A1
- US 8314375 B2
- US 2012215372 A1